# EUROPÄISCHE PATENTSCHRIFT

(11) **EP 1 241 334 B1**
(45) Veröffentlichungstag und Bekanntmachung des Hinweises auf die Patenterteilung: **06.07.2005**
(21) Anmeldenummer: 02405182.3
(22) Anmeldetag: 11.03.2002
(51) Int. Cl.: F02C 7/264, F23R 3/34

(54) **Verfahren zum Zünden einer thermischen Turbomaschine**
Ignition method for a turbomachine
Méthode d'allumage pour une turbomachine

(30) Priorität: 16.03.2001 DE 10112864
(43) Veröffentlichungstag der Anmeldung: 18.09.2002
(73) Patentinhaber: ALSTOM Technology Ltd, 5400 Baden (CH)
(72) Erfinder: Benz, Urs, 5073 Gipf-Oberfrick (CH); Hellat, Jaan Dr., 5406 Baden-Rütihof (CH); Joos, Franz Prof. Dr., 22605 Hamburg (DE); Schiessel, Pirmin, 5424 Unterehrendingen (CH); Stalder, Marcel, 5313 Klingnau (CH); Sybon, Günter Dr., 5412 Gebenstorf (CH)

(56) Entgegenhaltungen:
- GB-A- 2 116 308
- US-A- 4 205 524
- US-A- 5 002 483
- US-A- 5 636 511

## Beschreibung

### TECHNISCHES GEBIET

Die vorliegende Erfindung betrifft ein Verfahren zum Zünden einer thermischen Turbomaschine gemäss dem Oberbegriff des Anspruchs 1.

### STAND DER TECHNIK

Um eine kontinuierliche chemische Reaktion in Gang zu setzen, werden die Brennkammern von Feuerungen und Gasturbinenanlagen im allgemeinen über sogenannte Zündhilfen gezündet. Insbesondere sind dazu elektrische Zünd- oder Glühkerzen bekannt, jedoch wird zum Zünden häufig auch eine Gasflamme (Zundfackel) verwendet.

Zunächst werden dabei meist Hilfsbrenner gezündet, welche schliesslich die eigentlichen Brenner entfachen. Bei Gasturbinen wird teilweise auch der Hauptbrennstoff für die Zundbrenner verwendet, d.h. je nach Anwendungsfall Brennol, Kerosin oder Erdgas Gelegentlich kommen allerdings auch gut speicherbare Hilfsgase, wie z.B. Propan, zur Anwendung.

Der mittels der Zundhilfen erreichte Zünderfolg hängt von einer Vielzahl von Faktoren ab. Dazu gehören u.a. die Eintrittsbedingungen der Verbrennungsluft, wie Druck, Temperatur und Geschwindigkeit, der verwendete Zündbrennstoff und dessen Bedingungen, die Geometrie und Beschaffenheit der Brennkammer und schliesslich auch die Zusammensetzung der Verbrennungsluft.

Die Zündung von Brennkammern in thermischen Turbomaschinen, also beispielsweise in Gasturbinen, durch eine Zünd- oder Glühkerze ist unter anderem von A. Lefebvre in "Gas Turbine Combustion" (Arthur H. Lefebvre: *Gas Turbine Combustion,* Seiten 222-225 und Seiten 232/233, Hemisphere Publishing Corporation, 1983) beschrieben.

Voraussetzung für die Funktion der Zündvorrichtung ist selbstverständlich, dass am Zünder Bedingungen vorliegen, die das Entstehen einer stabilen und ausreichend kraftigen Zundflamme ermöglichen. Hierbei ist insbesondere die Einstellung des Brennstoff-Luftverhältnisses am Zunder sowie einer zweckmässigen Strömungsgeschwindigkeit im Bereich des Zünders zu nennen.

Insbesondere in den Brennkammern von Gasturbinen lassen sich diese Forderungen oft nur durch den Einsatz spezieller Zündbrenner erfüllen. Die Plazierung des Zünders unmittelbar im Brennraum verbietet sich aufgrund der oben erwähnten Kriterien von selbst. Häufig wird daher der Zunder in einem kleinen Zündraum untergebracht, so dass nur ein kleines Volumen durch die Initialzündung entflammt werden muss. In einem stromab dieses Zündraums gelegenen Flammrohr entsteht sukzessive eine stabile Zündflamme.

Ein solches Zündsystem für Gasturbinen ist aus der Schrift EP-A1-992 661 bekannt. Andere Zunder sind beispielsweise aus den Schriften US-A-2,967,244, US-A-3,404,939, US-A-5344,310, US-A-5,368,474 oder aus der internationalen Veröffentlichung WO96/39578 bekannt Ein Brenner mit einer Zündeinrichtung für gasformige Brennstoffe und Sauerstoff ist auch in der Schrift DD-241 457 beschrieben Weiter ist aus der Schrift DE-A1-4 320 429 ein Verfahren zum Zünden der Hauptflamme einer Brennkammer bekannt.

Bei derartigen Zündbrennern ist es üblich, für die Zündflamme magere Mischungen mit einem Brennstoff/Luft-Mischungsverhältnis Φ_{global} = 1/λ_{global} < 1 zu verwenden, wobei λ_{global} die über den gesamten Kontrollraum bilanzierte Luftzahl darstellt, d.h. dass ein mageres Gemisch gezündet wird. Lokal werden natürlich Mischungsverhaltnisse von der fetten bis zur mageren Stabilitätsgrenze realisiert.

US-A-4,205,524 beschreibt ein Verfahren zum Betreiben eines zweistufigen Verbrennungssystem mit einem vorteilhaften Dauerbetrieb. Bei dem Verfahren wird eine ersten Verbrennungszone brennstoffreich und eine zweite Zone brennstoffarm betrieben.

### DARSTELLUNG DER ERFINDUNG

Ziel der Erfindung ist es, die genannten Nachteile zu vermeiden. Der Erfindung liegt die Aufgabe zugrunde, ein Verfahren zur Zündung einer thermischen Turbomaschine zu schaffen, wobei eine Diffusionszündflamme mit sehr guten Zündeigenschaften über einen weiten Stabilitätsbereich erreicht werden soll.

Erfindungsgemäss wird die Aufgabe bei einem Verfahren zur Zündung einer thermischen Turbomaschine gemäss dem Oberbegriff des Anspruchs 1 dadurch gelöst, dass vor der Zündung der Brennkammer im Flammrohr der Zündvorrichtung ein globales Brennstoff/Luft-Mischungsverhältnis Φ_{global} = 1/λ_{global} grösser 1 herrscht, mit λ_{global} der globalen Luftzahl, das Brennstoff/Luft-Gemisch mittels des Zünders im Zündraum gezündet wird, und die Flamme und das verbleibende Brennstoff/Luft-Gemisch vom Zündraum durch das Flammrohr zur Brennkammer läuft und dort die Brennkammer zündet. In einer besonderen Ausführungsform wird ein globales Brennstoff/Luft-Mischungsverhältnis Φ_{global} von 1 bis 34 eingestellt.

Durch eine geeignete Wahl der Zuströmgeschwindigkeit der beiden Medien Luft/Brennstoff - höher als die Flammgeschwindigkeit - läuft danach das gezündete Brennstoff/Luft-Gemisch durch das Flammrohr in Richtung der Brennkammer. Dort wird die Flamme aufgrund einer Querschnittserweiterung stabilisiert. Die Zündung der Hauptbrenner erfolgt danach mittels der in der Brennkammer brennenden Zundflamme. Eine derartiges Verfahren führt zu einer sehr stabilen Diffusionsflamme, die zusätzlich die Eigenschaft hat, dass sie aufgrund ihrer Überfettung in Verbindung mit der Luft der Brennkammer gute Zündeigenschaften hat, indem nicht nur die heissen Gase der Zundlanze, sondern die zusätzlich entflammten Zonen des ummantelnden Uberschussbrennstoffs diffusionsartig verbrennen.

Bei der Art des eingesetzten Zündbrenners ist es von Vorteil, dass die Luft den Brennstoff vor der Zündung ringförmig umgibt und auf diese Weise der Brennstoff von aussen lokal verdünnt wird. Ebenfalls ist es denkbar, dass die Luft über mehrere Bohrungen in das Flammrohr eingedüst wird. Eine Stabilisierung der Zündflamme kann, wie bekannt, durch Freistrahl, durch einen Borda-Sprung oder durch Wirbelstrukturen erfolgen.

Zur besseren Zündung des fetten Gemischs, welches im Flammrohr vorliegt, ist es von Vorteil, zur Initialzündung der Zündflamme im Zundraum ein abgemagertes Brennstoff/Luft-Gemisch zu erzeugen und so das fette Gemisch dort lokal zu verdünnen.

Weiter ist es denkbar, dass vor und während der Zündung der Zündluft zusätzlicher Sauerstoff beigefügt wird. Dies führt zu einer Senkung der Mindestzündenergie zur Zündung des Gemisches Dies ist besonders von technischer Bedeutung bei der Zündung von Brennstoffen, die das besonders zündwillige H₂ enthalten.

Das Flammrohr kann nur einmalig zum Zünden der Brennkammer genutzt werden und der Brennkammer kann danach über das Flammrohr Brennstoff und/oder Luft zugeführt werden

### KURZE BESCHREIBUNG DER ZEICHNUNG

Nachfolgend wird die Erfindung anhand der Figuren naher erläutert, wobei die einzige Figur eine Ausführungsform einer erfindungsgemassen thermischen Turbomaschine mit einem Gehäuse, einer Brennkammer, einer Zundvornchtung und einem Brennstoff/Luft-Mischungsverhältnis Φ im Flammrohr zeigt

### WEG ZUR AUSFÜHRUNG DER ERFINDUNG

Ein Beispiel fur eine Zündvorrichtung 10, mit welcher das efindungsgemasse Verfahren durchgeführt werden kann, ist in der einzigen Figur dargestellt. Die Zundvornchtung 10 ist an der Wand 80 eines Brennraumes montiert Ein Flammrohr 40 ist zum Inneren des Brennraumes 30 hin offen. Über eine oder mehrere Brenngasleitungen 60 wird dem Flammrohr Brenngas zugeführt, während die Luftversorgung über die Kanäle 70 erfolgt. Auf der Stirnseite des Flammrohres 40 befindet sich der Zundraum 50, in dessen Innerem der Zünder 51 angeordnet ist. Der Zündraum 50 ist durch mindestens einen Verbindungskanal 55, 56 mit einer Luftversorgung 70 und einer Brenngasversorgung 60 verbunden. Die Verbindungskanäle 55, 56 können selbstverständlich auch einen Winkel mit der Achse 53 des Zündraums 50 oder einen Lateralversatz aufweisen, um ein zweckmässiges Strömungsfeld im Zündraum 50 zu erzeugen Prinzipiell ist der Aufbau dieses Zünders aus der Schrift EP-A1-992 661 bekannt. Diese Schrift ist ein integraler Bestandteil dieser Beschreibung.

Bei einer Beaufschlagung der Brenngas- und Luftzuführungen 60, 70 mit Brenngas und Luft strömen diese grösstenteils in das Flammrohr 40 ein. Ein Teilstrom jeden Mediums strömt durch die Versorgungsöffnungen 55, 56 in den Zündraum 50 und kann dort mittels des Zünders 51, beispielsweise einer Zündkerze, entzündet werden. Zunächst muss im Zündraum 50 nur eine verhältnismässig kleine Menge brennbaren Gemisches entzündet werden, wobei durch das Querschnittsverhaltnis der Versorgungsöffnungen 55, 56 zueinander die Stochiometrie des im Zundraum vorhandenen Gemisches unabhängig von anderen Parametern eingestellt werden kann. Zudem ist auch die Strömungsgeschwindigkeit im Zündraum 50 verhältnismässig gering. Daher wird auch mit kleinen Zündenergien eine sichere Zündung erreicht. Die so entstehende Pilotflamme, deren Intensität durch die Geometrie des Zündraumes 50 beeinflusst werden kann, tritt aus dem Zündraum 50 in das Flammrohr 40 ein Das dort befindliche Brenngas wird durch die Pilotflamme in einem wesentlich grösseren Konzentrationsbereich zuverlässig entzündet, als dies der Fall wäre, wenn hier nur die geringe, beispielsweise durch eine Zündkerze oder Glühkerze erzeugte Zundenergie zur Verfugung stande Im Flammrohr 40 wird nun die eigentliche Zundflamme erzeugt, die in den Brennraum 30 austritt, und eine hinreichende Intensität aufweist, um dort durch Querzundung zu anderen Brennern eine sichere Zündung im gesamten Warmeerzeuger zu gewährleisten.

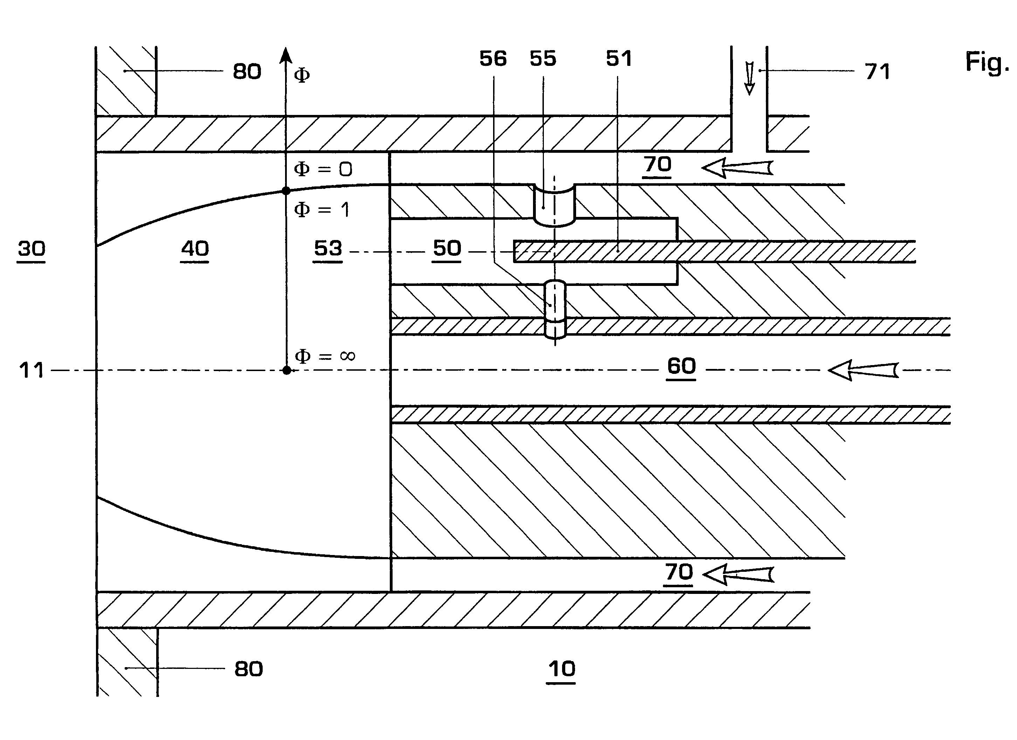

Wie aus der Figur 1 ersichtlich wird bei dem Verfahren gemäss der vorliegenden Erfindung im Flammrohr 40 lokal unterschiedliche Brennstoff/Luft-Mischungsverhältnisse Φ erreicht, wobei gilt Φ = 1/λ, mit λ der Luftzahl (stöchiometrisches Verhältnis von Luft zu Brennstoff). Während in einer Ummantelung um den Brennstoff herum reine Luft vorliegt, also ein Mischungsverhältnis von Φ = 0, ist in der Mitte des Flammrohrs 40 reiner Brennstoff, also ein Mischungsverhältnis von Φ = ∞, vorhanden. Zwischen diesen beiden Zonen bildet sich eine Grenze mit einem stöchiometrischen Brennstoff/Luft-Mischungsverhältnis von Φ = 1. Bei dem Befüllen des Flammrohrs 40 weitet sich diese Zone mit Φ = 1 vor der Zündung durch Diffusion im Flammrohr 40 in Richtung der Brennkammer 30 aus. Zwischen der Zone mit Φ = 0 bzw. Φ = 1 und der Mitte des Flammrohrs mit Φ = ∞ variiert das Mischverhaltnis Φ.

Erfindungsgemäss bei dem hier beschriebenen Verfahren wird bei der Zündung im Flammrohr 40 ein globales Brennstoff/Luft-Mischungsverhältnis von Φ_{global} = 1/λ_{global} grosser 1 erziehlt, mit λ_{global} der globalen Luftzahl. Im Rahmen der Erfindung ist es im Prinzip denkbar, ein globales Brennstoff/Luft-Mischungsverhältnis Φ_{global} = 1/λ_{global} zwischen 1 und 34 vor und während der Zündung einzustellen In der Regel wird es in diesem Bereich konstant gehalten. Eine derartige Ausführung fuhrt zu einer sehr stabilen Diffusionsflamme, die zusätzlich die Eigenschaft hat, dass sie aufgrund ihrer Überfettung in Verbindung mit der Luft der Brennkammer 30 gute Zündeigenschaften hat, indem nicht nur die heissen Gase der Zündlanze, sondern die zusätzlich entflammten Zonen des ummantelnden Überschussbrennstoffs diffusionsartig verbrennen Das erfindungsgemasse Verfahren zeichnet sich zudem durch ein verbessertes Querzundverhalten der Hauptbrenner untereinander aus.

Zur besseren Zündung des fetten Gemischs, welches im Flammrohr 40 vorliegt, ist es von Vorteil, zur Initialzündung der Zundflamme im Zundraum 50 ein abgemagertes Brennstoff/Luft-Gemisch zu erzeugen und so das fette Gemisch lokal zu verdünnen.

Eine Stabilisierung der Zündflamme kann, wie bekannt durch Freistrahl, durch einen Borda-Sprung oder durch Wirbelstrukturen erfolgen.

Es ist zudem denkbar, dass das Flammrohr nur einmalig zum Zünden der Brennkammer genutzt wird und dass danach über das Zundrohr der Brennkammer oder dem Flammrohr Brennstoff und/oder Luft zugeführt wird.

Weiter wird vorgeschlagen, dass vor und während der Zündung der thermischen Turbomaschine anstelle von zusätzlichen Zündgasen der Luftzuführung 70 des Zündbrenners 10 zusätzlich Saustoff durch eine Saustoffzuführung 71 zugemischt wird. Selbst verständlich kann dem Brennstoff/Luftgemisch der Brennkammer 30 ebenso Saustoff zugeführt werden. Dies ist insbesondere von technischer Bedeutung bei der Verbrennung von Brennstoffen, die den besonders zündwilligen Wasserstoff enthalten, etwa H₂/CO-Gemisch, MBTU-, LBTU-Brenngase oder flüssige Brennstoffe wie zum Beispiel Öle oder Alkohole.

Die Verwendung von zusatzlichem Sauerstoff in der Luft bzw. in dem Brennstoff/Luftgemisch bewirkt gegenüber von (reiner) Luft eine Absenkung der benötigten Mindestzündenergien der Brennstoffe

Wurden bisher MBTU-Brenngase zur sicheren Verbrennung mit Inertgasen verdünnt, so wird durch den zusätzlichen Sauerstoff das Zündverhalten ohne Verdünnung verbessert.

Selbstverständlich kann durch Sauerstoffzugabe das Zünden von Zundbrennern bei entsprechend schwierigen Bedingungen (niedriger Druck, tiefe Temperaturen, hohe Strömungsgeschwindigkeit) erleichtert werden.

### Bezugszeichenliste

- 10: Zündvorrichtung
- 11: Mittelachse der Zündvorrichtung
- 30: Brennraum
- 40: Flammrohr
- 50: Zündraum
- 51: Zünder
- 53: Symmetrieachse des Zunders
- 55: Verbindungskanal zwischen Luftzuführung und Zündraum
- 56: Verbindungskanal zwischen Brenngaszuführung und Zündraum
- 60: Brenngaszufuhrung
- 70: Luftzuführung
- 71: Sauerstoffzuführung
- 80: Brennraumwand

## Patentansprüche

1. Verfahren zum Zünden einer thermischen Turbomaschine, wobei die Turbomaschine eine Brennkammer (30), eine Zündvorrichtung (10), eine Brennstoffzufuhr (60) und eine Luftzufuhr (70) enthält, wobei die Zündvorrichtung (10) aus einem Zundraum (50) und einem in dem Zundraum (50) angeordneten Zunder (51) besteht, wobei die Brennstoffzufuhr (60) und die Luftzufuhr (70) in den Zündraum (50) munden und wobei der Zündraum (50) über ein Flammrohr (40) mit der Brennkammer (30) verbunden ist,
**dadurch gekennzeichnet, dass**
vor der Zündung der Brennkammer (30) im Flammrohr (40) der Zündvorrichtung (10) ein globales Brennstoff/Luft-Mischungsverhältnis Φ_{global} = 1/λ_{global} grösser 1 eingestellt wird, mit λ_{global} der globalen Luftzahl, das Brennstoff/Luft-Gemisch mittels des Zünders (51) im Zündraum (50) gezündet wird, und die Flamme und das verbleibende Brennstoff/Luft-Gemisch vom Zündraum (50) durch das Flammrohr (40) zur Brennkammer (30) läuft und dort die Brennkammer (30) zündet.

2. Verfahren zum Zünden einer thermische Turbomaschine gemass dem Anspruch 1,
**dadurch gekennzeichnet, dass**
vor der Zündung im Flammrohr (40) ein globales Brennstoff/Luft-Mischungsverhaltnis Φ_{global} = 1/λ_{global} zwischen 1 und 34 eingestellt wird.

3. Verfahren zur Zündung einer thermischen Turbomaschine nach einem der Ansprüche 1 oder 2,
**dadurch gekennzeichnet, dass**
vor der Zündung die Luft den Brennstoff im Flammrohr (40) ringförmig umgibt und auf diese Weise der Brennstoff lokal verdünnt wird.

4. Verfahren zur Zündung einer thermischen Turbomaschine nach einem der Ansprüche 1 oder 2,
**dadurch gekennzeichnet, dass**
der Zundvorgang mittels des Zunders (51) im Zünderraum (50) mit einem mageren Brennstoff/Luft-Gemisch geschieht.

5. Verfahren zur Zündung einer thermischen Turbomaschine nach einem der Ansprüche 1 oder 2,
**dadurch gekennzeichnet, dass**
vor und während der Zündung der Zündluft zusätzlicher Sauerstoff beigefügt wird.

6. Verfahren zur Zündung einer thermischen Turbomaschine nach einem der Ansprüche 1 oder 2,
**dadurch gekennzeichnet, dass**
die Zündflamme im Flammrohr (40) durch einen Freistrahl, durch einen Borda-Sprung oder durch Drall stabilisiert wird.

7. Verfahren zur Zündung einer thermischen Turbomaschine nach einem der Ansprüche 1 oder 2,
**dadurch gekennzeichnet, dass**
das Flammrohr (40) nur einmalig zum Zünden der Brennkammer (30) genutzt wird und dass danach über das Flammrohr (40) der Brennkammer (30) Brennstoff und/oder Luft zugeführt wird.

## Claims

1. Method for igniting a thermal turbomachine, the turbomachine containing a combustion chamber (30), an ignition device (10), a fuel supply (60) and an air supply (70), the ignition device (10) consisting of an ignition space (50) and of an ignitor (51) arranged in the ignition space (50), the fuel supply (60) and the air supply (70) issuing into the ignition space (50), and the ignition space (50) being connected to the combustion chamber (30) via a flame tube (40), **characterized in that**, prior to the ignition of the combustion chamber (30), an overall fuel/air mixture ratio Φₒᵥₑᵣₐₗₗ = 1/λₒᵥₑᵣₐₗₗ greater than 1 is set in the flame tube (40) of the ignition device (10), with λₒᵥₑᵣₐₗₗ being the overall air ratio, the fuel/air mixture is ignited by means of the ignitor (51) in the ignition space (50), and the flame and the remaining fuel/air mixture runs from the ignition space (50) through the flame tube (40) to the combustion chamber (30) and ignites the combustion chamber (30) there.

2. Method for igniting a thermal turbomachine according to Claim 1, **characterized in that**, prior to ignition, an overall fuel/air mixture ratio Φₒᵥₑᵣₐₗₗ = 1/λₒᵥₑᵣₐₗₗ of between 1 and 34 is set in the flame tube (40).

3. Method for igniting a thermal turbomachine according to one of Claims 1 and 2, **characterized in that**, prior to ignition, the air surrounds the fuel annularly in the flame tube (40) and the fuel is thereby diluted locally.

4. Method for igniting a thermal turbomachine according to one of Claims 1 and 2, **characterized in that** the ignition operation is carried out by means of the ignitor (51) in the ignition space (50) with a lean fuel/air mixture.

5. Method for igniting a thermal turbomachine according to one of Claims- 1 and 2, **characterized in that**, prior to and during ignition, additional oxygen is added to the ignition air.

6. Method for igniting a thermal turbomachine according to one of Claims 1 and 2, **characterized in that** the ignition flame in the flame tube (40) is stabilized by means of a free jet, by a borda jump or by a swirl.

7. Method for igniting a thermal turbomachine according to one of Claims 1 and 2, **characterized in that** the flame tube (40) is used only once for igniting the combustion chamber (30), and **in that** the fuel and/or air is thereafter supplied to the combustion chamber (30) via the flame tube (40).

## Revendications

1. Procédé d'allumage d'une turbomachine thermique, dans lequel la turbomachine comprend une chambre de combustion (30), un dispositif d'allumage (10), une alimentation en combustible (60) et une alimentation en air (70), le dispositif d'allumage (10) se composant d'un espace d'allumage (50) et d'un allumeur (51) disposé dans l'espace d'allumage (50), l'alimentation en combustible (60) et l'alimentation en air (70) débouchant dans l'espace d'allumage (50) et dans lequel l'espace d'allumage (50) est connecté par le biais d'un tube de flamme (40) à la chambre de combustion (30),
**caractérisé en ce que**
avant l'allumage de la chambre de combustion (30) dans le tube de flamme (40) du dispositif d'allumage (10), on ajuste un rapport de mélange combustible/air global φ_{global} = 1/λ_{global} supérieur à 1, λ_{global} étant le rapport d'air global, le mélange combustible/air est allumé au moyen de l'allumeur (51) dans l'espace d'allumage (50) et la flamme et le mélange combustible/air restant vont de l'espace d'allumage (50) à travers le tube de flamme (40) jusqu'à la chambre de combustion (30) et s'y allument dans la chambre de combustion (30).

2. Procédé d'allumage d'une turbomachine thermique selon la revendication 1,
**caractérisé en ce que**
avant l'allumage dans le tube de flamme (40), on ajuste un rapport de mélange combustible/air global φ_{global} = 1/λ_{global} compris entre 1 et 34.

3. Procédé d'allumage d'une turbomachine thermique selon l'une quelconque des revendications 1 ou 2,
**caractérisé en ce que**
avant l'allumage, l'air entoure le combustible sous forme annulaire dans le tube de flamme (40) et de ce fait le combustible est localement dilué.

4. Procédé d'allumage d'une turbomachine thermique selon l'une quelconque des revendications 1 ou 2,
**caractérisé en ce que**
l'opération d'allumage s'effectue au moyen de l'allumeur (51) dans l'espace d'allumage (50) avec un mélange combustible/air pauvre.

5. Procédé d'allumage d'une turbomachine thermique selon l'une quelconque des revendications 1 ou 2,
**caractérisé en ce que**
avant et pendant l'allumage, on mélange à l'air d'allumage de l'oxygène supplémentaire.

6. Procédé d'allumage d'une turbomachine thermique selon l'une quelconque des revendications 1 ou 2,
**caractérisé en ce que**
la flamme d'allumage dans le tube de flamme (40) est stabilisée par un jet libre, par un jet de Borda ou par un tourbillon.

7. Procédé d'allumage d'une turbomachine thermique selon l'une quelconque des revendications 1 ou 2,
**caractérisé en ce que**
le tube de flamme (40) n'est utilisé qu'une seule fois pour l'allumage de la chambre de combustion (30) et **en ce qu'**après, du combustible et/ou de l'air sont acheminés à la chambre de combustion (30) par le biais du tube de flamme (40).
